# EUROPEAN PATENT SPECIFICATION

(11) **EP 3 925 727 B1**
(45) Date of publication and mention of the grant of the patent: **09.09.2026**
(21) Application number: 20755580.6
(22) Date of filing: 13.02.2020
(51) Int. Cl.: B23K 26/356, B23K 26/146, C21D 10/00, B23K 26/0622, B23K 26/08

(54) **LASER PROCESSING DEVICE, AND LASER PROCESSING METHOD**
LASERBEARBEITUNGSVORRICHTUNG UND LASERBEARBEITUNGSVERFAHREN
DISPOSITIF DE TRAITEMENT LASER ET PROCÉDÉ DE TRAITEMENT LASER

(30) Priority: 13.02.2019 JP 2019023641
(43) Date of publication of application: 22.12.2021
(73) Proprietor: Foundation Nagoya Industrial Science Research Institute, Nagoya, Aichi 460-0008 (JP)
(72) Inventor: TAIRA, Takunori, Okazaki-shi, Aichi 444-8585 (JP); SANO, Yuji, Yokohama-shi, Kanagawa 220-0012 (JP); ZHENG, Lihe, Okazaki-shi, Aichi 444-8585 (JP); LIM, Hwan Hong, Okazaki-shi, Aichi 444-8585 (JP)
(74) Representative: Ribeiro, James Michael
(86) International application number: PCT/JP2020/005629
(87) International publication number: WO 2020/166670

(56) References cited:
- EP-A1- 3 613 534
- JP-A- 2009 012 061
- JP-A- 2010 248 634
- JP-A- 2010 248 634
- JP-A- 2011 064 503
- JP-A- 2013 107 143
- JP-A- 2015 093 284
- US-A- 5 127 019
- US-A1- 2012 074 105
- US-B1- 6 197 133

## Description

The present invention relates to a laser processing device, and a laser processing method.

### Background Art

As a processing method using a laser, a processing method using a laser peening process is known (refer to Patent Literature 1). The laser peening process is a technology of strengthening a surface of a processing region by using an impact force when irradiating the processing region of a workpiece disposed in a liquid (for example, water) or the processing region of a workpiece covered with a liquid film (for example, a water film) with a high-intensity pulsed laser.

### Citation List

### Patent Literature

Patent Literature 1: Japanese Unexamined Patent Publication No. 2000-246468. Patent Literature 2: Japanese Unexamined Patent Publication No. 2010-248634 (describing the preamble of claim 1).

### Summary of Invention

### Technical Problem

In the laser peening process, the processing region of the workpiece is irradiated with a high-intensity pulsed laser through a liquid. Therefore, an acoustic lattice may be formed in the liquid due to an interaction between the liquid on the processing region and an electric field of the pulsed laser light. When the acoustic lattice is formed in this manner, stimulated brillouin scattering (SBS) occurs, and as a result, there is a problem that laser light cannot be effectively used. Here, description has been given with focus given to the laser peening process, but even when subjecting the processing region to a laser forming process by irradiating the processing region of the workpiece with the high-intensity pulsed laser light through a liquid, a similar problem occurs.

An object of the invention is to provide a laser processing device and a laser processing method which are capable of effectively using energy of laser light in a laser peening process or a laser forming process.

### Solution to Problem

The inventors of the present application have extensively studied to solve the problem. As a result, they found that when a pulse width of pulsed laser light is 2 ns or less, an influence of SBS can be reduced, and they have accomplished the invention.

According to a first aspect of the invention, there is provided a laser processing device according to claim 1 that irradiates a processing region of a workpiece with pulsed laser light through a liquid to subject the processing region to a laser peening process or a laser forming process. The laser processing device includes: a laser irradiation unit including a laser oscillator that outputs the pulsed laser light; and a water injection unit that includes an injection port through which the liquid is injected to the processing region, and accommodates the laser irradiation unit. A pulse width of the pulsed laser light is 200 ps to 2 ns, and the pulsed laser light output from the laser oscillator is emitted to the processing region through a liquid that is injected from the injection port.

In the above-described configuration, the processing region can be irradiated with the pulsed laser light while injecting a liquid from the injection port of the accommodation unit, and thus it is possible to carry out the laser peening process or the laser forming process on the processing region. Since the pulse width of the pulsed laser light is 200 ps to 2 ns, even when irradiating the processing region with the pulsed laser light through the liquid, an influence of SBS can be reduced. As a result, energy of the pulsed laser light can be effectively used in the laser peening process or the laser forming process. In addition, the pulsed laser light output from the laser oscillator is emitted to the processing region through the liquid injected from the injection port. Accordingly, for example, differently from a case where the pulsed laser light is incident to a liquid film formed on the processing region through the atmosphere, refraction and reflection do not occur in a boundary between the liquid film and the atmosphere. Also in this regard, energy of the pulsed laser light can be effectively used.

The laser irradiation unit may include a condensing unit that condenses the pulsed laser light generated by the laser oscillator to the processing region. According to this, laser intensity necessary for the laser peening process or the laser forming process in the processing region can be more reliably secured.

The pulsed laser light may be laser light of which a polarization state is unsteady. When the polarization state of the pulsed laser light is unsteady, an acoustic lattice is less likely to be formed in a liquid injected to the processing region in comparison to linearly polarized light of which a polarization state is steady. Accordingly, the influence of the SBS can be further reduced. In this specification, the laser light of which the polarization state is unsteady represents laser light of which the polarization state varies in at least one of a temporal state and a spatial state. Examples of the laser light of which the polarization state is unsteady include elliptically polarized light or unpolarized laser light, an optical vortex, and a vector beam.

According to a second aspect of the invention, there is provided a laser processing method according to claim 4 which involves irradiating a processing region of a workpiece with pulsed laser light through a liquid to subject the processing region to a laser peening process or a laser forming process. The pulse width of the pulsed laser light is 200 ps to 2 ns, and the pulsed laser light is laser light of which a polarization state is unsteady, or is multi-mode laser light.

In the above-described method, since the pulse width of the pulsed laser light is 200 ps to 2 ns, even when irradiating the processing region with the pulsed laser light through the liquid, the influence of the SBS can be reduced. When the polarization state of the pulsed laser light is unsteady, an acoustic lattice is less likely to be formed in a liquid, for example, in comparison to linearly polarized light. The polarization state of the pulsed laser light used in the above-described method is unsteady, and also in this regard, the influence of the SBS can be reduced. Accordingly, in the above-described method, energy of the pulsed laser light can be effectively used in the laser peening process or the laser forming process.

In one embodiment of the laser processing method, the pulsed laser light may be multi-mode laser light. In the multi-mode laser light, the acoustic lattice is less likely to be formed in a liquid in comparison to a single-mode laser light. Accordingly, in a case where the pulsed laser light is the multi-mode laser light, the influence of the SBS can be further reduced.

### Advantageous Effects of Invention

According to the invention, it is possible to provide a laser processing device and a laser processing method which are capable of effectively using energy of laser light in a laser peening process or a laser forming process.

### Brief Description of Drawings

FIG. 1 is a view illustrating a schematic configuration of a laser processing device according to an embodiment.
FIG. 2 is a view illustrating a schematic configuration of an example of a laser irradiation unit provided in the laser processing device illustrated in FIG. 1.
FIG. 3 is a view illustrating a schematic configuration of another example of the laser processing device.
FIG. 4 is a view illustrating a schematic configuration of still another example of the laser processing device.
FIG. 5 is a view illustrating a schematic configuration of still another example of the laser processing device.
FIG. 6 is a view illustrating a schematic configuration of another example of the laser irradiation unit illustrated in FIG. 2.
FIG. 7 is a view illustrating a schematic configuration of another example of a laser oscillator.
FIG. 8 is a schematic view illustrating an example of pulsed laser light output from the laser oscillator illustrated in FIG. 7.
FIG. 9 is a view illustrating a schematic configuration of a first modification example of the laser oscillator illustrated in FIG. 7.
FIG. 10 is a view illustrating a schematic configuration of a second modification example of the laser oscillator illustrated in FIG. 7.
FIG. 11 is a view illustrating a schematic configuration of a third modification example of the laser oscillator illustrated in FIG. 7.
FIG. 12 is a view illustrating a schematic configuration of another example of the third modification example of the laser oscillator illustrated in FIG. 7.
FIG. 13 is a view illustrating a schematic configuration of a fifth modification example of the laser oscillator illustrated in FIG. 7.

### Description of Embodiments

Hereinafter, an embodiment of the invention will be described in detail with reference to the accompanying drawings. In description of the drawings, the same reference numeral will be given to the same or equivalent element, and redundant description will be omitted. Dimension ratios of the drawings do not always match described dimension ratios. Hereinafter, in this specification, meaning of "elliptically polarized light" also includes "circularly polarized light" that is one example of the elliptically polarized light.

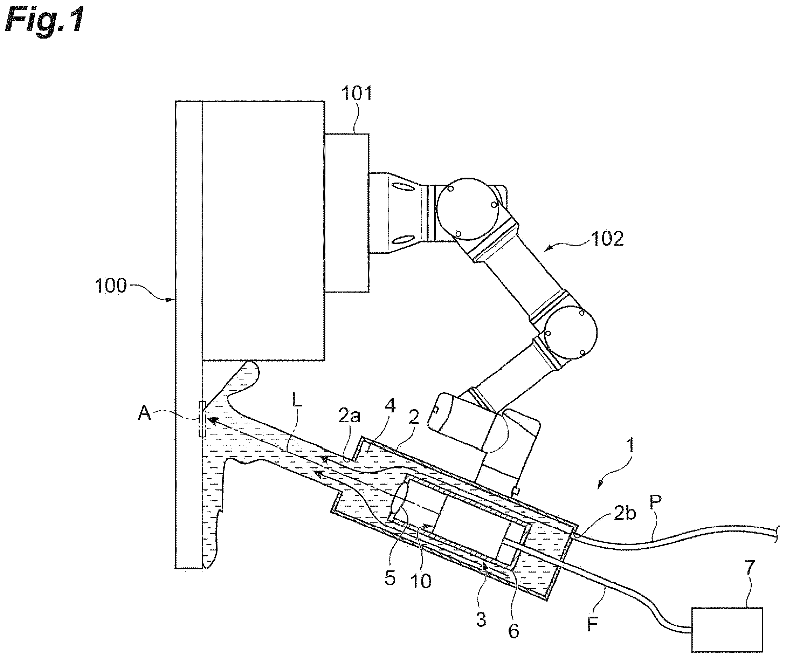

A laser processing device 1 illustrated in FIG. 1 is a device that performs a laser peening process with respect to a processing region A by irradiating the processing region A (region surrounded by a broken line) of a workpiece 100 with pulsed laser light L. For example, the workpiece 100 is a structure having a three-dimensional shape. The laser processing device 1 includes a water injection unit (accommodation unit) 2 and a laser irradiation unit 3.

The water injection unit 2 is a hollow body in which an injection port 2a through which water 4 is injected is formed at one end. For example, the water injection unit 2 is a water injection nozzle. The water injection unit 2 injects the water 4, which is supplied from a pipe (water flow path) P connected to a pipe connection portion 2b of the water injection unit 2, to the processing region A from the injection port 2a. An end of the pipe P on a side opposite to the water injection unit 2 side may be connected to a water supply source.

The laser irradiation unit 3 is accommodated in the water injection unit 2. The laser irradiation unit 3 includes a laser oscillator 10, a condensing lens (condensing unit) 5, and a housing 6.

The laser oscillator 10 outputs elliptically polarized pulsed laser light L. The laser oscillator 10 includes a resonator, a laser medium disposed inside the resonator, a pulse generation unit (for example, a Q switch element) that generates the pulsed laser light L. A pulse width of the pulsed laser light L generated by the laser oscillator 10 is 200 ps to 2 ns. For example, the pulse width may be 400 ps to 2 ns. An upper limit of the pulse width may be 1.5 ns. An example of intensity of the pulsed laser light L may be intensity necessary for the laser peening process. For example, the intensity is 5 TW/m² or greater in a processing region of a workpiece. For example, an upper limit of the intensity of the pulsed laser light L is 100 TW/m² in the processing region of the workpiece. The laser oscillator 10 may output multi-mode pulsed laser light L.

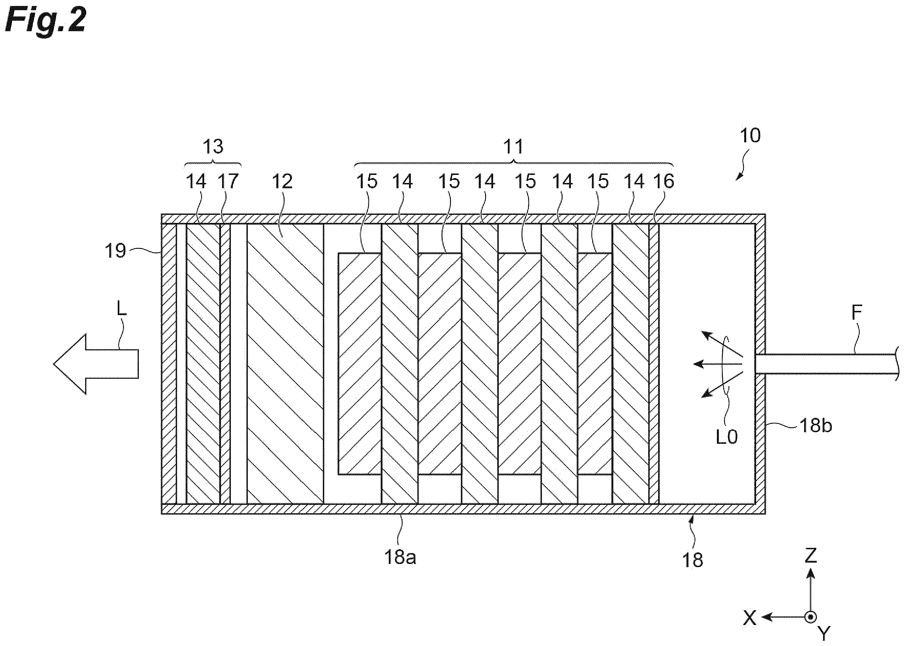

The laser oscillator 10 is supplied with excitation light L0 (refer to FIG. 2) from an excitation unit 7 disposed outside the water injection unit 2 through an optical fiber F, and generates the elliptically polarized pulsed laser light L. The excitation unit 7 may include an excitation light source (for example, a semiconductor laser element such as a laser diode), a driver that drives the excitation light source, and an optical system that allows the excitation light L0 from the excitation light source to be incident to the optical fiber F. An example of the laser oscillator 10 will be described with reference to FIG. 2.

The laser oscillator 10 includes a stacked body 11 in which a plurality of heat sinks (transparent heat transfer bodies) 14 and a plurality of laser media 15 are alternately stacked, a Q switch element 12 that is the pulse generation unit, a mirror 13 that constitutes a part of the resonator in the laser oscillator 10, and a polarization adjustment element 19 that adjusts a polarization state.

For convenience of explanation, a stacking direction of the heat sinks 14 and the laser media 15 is referred to as an X-direction, and two directions orthogonal to the X-direction are referred to as a Y-direction and a Z-direction, respectively. The Y-direction and the Z-direction are orthogonal to each other. In the laser oscillator 10, the stacked body 11, the Q switch element 12, the mirror 13, and the polarization adjustment element 19 are sequentially arranged along the X-direction.

As an example, in the laser oscillator 10, when excitation light L0 of continuous oscillation in a wavelength of 808 nm is input from one end (a right side in FIG. 2) in the X-direction along the X-direction, pulsed laser light L is output from the other end (a left side in FIG. 2) in the X-direction.

The plurality of heat sinks 14 and the plurality of laser media 15 provided in the stacked body 11 are alternately stacked along the X-direction. In other words, the heat sinks 14 and the laser media 15 are alternately arranged in the X-direction. In the stacked body 11 illustrated in FIG. 2, in the X-direction, one end of the stacked body 11 is one of the heat sinks 14, and the other end is one of the laser media 15.

The heat sinks 14 and the laser media 15 have a plate shape in which the X-direction is a thickness direction. For example, the heat sinks 14 have a flat plate shape in which the thickness is 1 mm, a vertical dimension is 10 mm, and a lateral dimension is 10 mm. For example, the laser media 15 have a flat plate shape in which the thickness is 1 mm, a vertical dimension is 8 mm, and a lateral dimension is 8 mm. Each of the heat sinks 14 and each of the laser media 15 are bonded without adhesive (in other words, are directly bonded). In this embodiment, the heat sink 14 and the laser medium 15 are bonded to each other at room temperature.

The heat sink 14 and the laser medium 15 are transparent with respect to the pulsed laser light L output from the laser oscillator 10. In this specification, "transparent with respect to certain light (hereinafter, may be referred to as "specific light" in this specification)" (hereinafter, also simply referred to as "transparent") represents that specific light is transmitted through, and specifically, the specific light passes while maintaining intensity. For example, here, "transparent" represents that a transmittance (net transmittance excluding a Fresnel loss) with respect to specific light is 95% or greater, and specifically, 97% or greater. This is the same in the following "transparent". At least one of the heat sink 14 and the laser medium 15 contains an oxide.

The heat sink 14 has a function of radiating heat of the laser medium 15. A material of the heat sink 14 is a material of which heat conductivity is equal to or greater than that of the laser medium 15. Examples of the material of the heat sink 14 include sapphire, diamond, and additive-free YAG. The heat sink 14 may contain an oxide.

The laser medium 15 is a material that forms a population inversion in which amplification is greater than absorption in an excited state, and amplifies light by using stimulated emission. The laser medium 15 is also referred to as "gain medium". As the laser medium 15, various known laser media can be used.

Examples of the material of the laser medium 15 include an optical gain material formed from an oxide to which a rare-earth ion that becomes a light-emitting center is added, an optical gain material formed from an oxide to which a transition metal ion that becomes the light-emitting center is added, and an optical gain material formed from an oxide that becomes a color center.

Examples of the rare-earth ion include Ce, Pr, Nd, Pm, Sm, Eu, Gd, Tb, Dy, Ho, Er, Tm, and Yb. Examples of the transition metal ion include Ti, V, Cr, Mn, Fe, Co, Ni, and Cu. Examples of a base material include a garnet type such as YAG, YSAG, YGAG, YSGG, GGG, GSGG, and LuAG, a fluoride type such as YLF, LiSAF, LiCAF, MgF₂, and CaF₂, a vanadate type such as YVO₄, GdVO₄, and LuVO₄, an apatite type such as FAP, sFAP, VAP, and sVAP, an alumina type such as Al₂O₃ and BeAl₂O₃, a di-trioxide type such as Y₂O₃, Sc₂O₃, and Lu₂O₃, and a tungstate type such as KGW and KYW. The base material may be a single crystal, or a polycrystalline ceramic material. The base material may be various kinds of amorphous glass or the like.

In the stacked body 11, in a case where a difference in refractive index between the heat sink 14 and the laser medium 15 is large (for example, the difference in refractive index is 9% or greater), an intermediate layer configured to reduce the difference in refractive index may be formed on at least one of facing surfaces in the heat sink 14 and the laser medium 15.

In this embodiment, a material of the heat sink 14 is sapphire, and a material of the laser medium 15 is Nd:YAG. In this case, the intermediate layer is not necessary.

A first coating layer 16 is formed on a surface of one end of the heat sink 14 located at one end (a side opposite to the Q switch element 12, a right end in FIG. 2) in the X-direction among the plurality of heat sinks 14 provided in the stacked body 11. The first coating layer 16 is a dielectric multi-layer film, and has a reflection characteristic that is nonreflective with respect to a wavelength of the excitation light L0 and is highly reflective with respect to a wavelength of the pulsed laser light L. The heat sink 14 on which the first coating layer 16 is formed constitutes a resonator in combination with the mirror 13. In other words, the heat sink 14 on which the first coating layer 16 is formed also functions as a mirror paired with the mirror 13.

Various coating layers may be provided in the heat sink 14 and the laser medium 15 to adjust a reflection characteristic on each interface between the heat sink 14 and the laser medium 15 to a desired value.

For example, the stacked body 11 may be manufactured as follows. First, the plurality of heat sinks 14 and the plurality of laser media 15 are prepared. The first coating layer 16 is film-formed on a surface of one heat sink 14 among the plurality of heat sinks 14. In the film formation, various known film formation method can be employed. Next, each of the plurality of heat sinks 14 and each of the plurality of laser media 15 are bonded to each other without adhesive while alternately stacking (arranging) the heat sinks 14 and the laser media 15. According to this, the stacked body 11 is obtained. When stacking the plurality of heat sinks 14 and the plurality of laser media 15, the heat sink 14 in which the first coating layer 16 is film-formed is disposed at one end, and the laser medium 15 is disposed at the other end. In the bonding between the heat sink 14 and the laser medium 15, a surface-activated room-temperature bonding can be used. The surface-activated room-temperature bonding (hereinafter, also simply referred to as "room-temperature bonding") is a method in which an oxide film or a surface-attached substance of a bonding surface of a material to be bonded in vacuo is removed through ion beam irradiation or FAB (neutral atomic beam) irradiation, and bonding surfaces, that are flat and from which constituent elements have been exposed, are bonded to each other. The room-temperature bonding is direct bonding using intermolecular bonds.

The Q switch element 12 is disposed between the stacked body 11 and the mirror 13 in the X-direction. The Q switch element 12 is a saturable absorber having characteristics in which absorption capability is saturated when optical intensity incident to the Q switch element 12 increases. The Q switch element 12 may be a Q switch element that is used in pulsed laser oscillation. Accordingly, a material of the Q switch element 12 may be a material of a Q switch element that is used in pulsed laser oscillation. In this embodiment, the material of the Q switch element 12 is Cr:YAG.

The mirror 13 includes a heat sink 14 and a second coating layer 17 formed on one surface of the heat sink 14. The heat sink 14 also functions as a substrate that supports the second coating layer 17. The second coating layer 17 is a dielectric multi-layer film configured to function as a part of the resonator. It is not necessary for the substrate that supports the second coating layer 17 to be the heat sink 14 as long as the substrate is a transparent substrate. The second coating layer 17 may be film-formed in a similar manner as in the case of the first coating layer 16. In FIG. 2, the second coating layer 17 is formed on a surface facing the Q switch element 12, but may be formed on an opposite surface.

The polarization adjustment element 19 is disposed on a side opposite to the Q switch element 12 with respect to the mirror 13. The polarization adjustment element 19 is an element configured to convert pulsed laser light passed through the mirror 13 to a desired polarization state. The polarization adjustment element 19 in this embodiment is a λ/4 plate. In the configuration of the exemplified embodiment, since a polarization state of the pulsed laser light transmitted through the mirror 13 is linearly polarized light, the pulsed laser light is converted to elliptically polarized light by the polarization adjustment element 19 and is output.

In the laser oscillator 10 exemplified in FIG. 2, for example, a reduction in size to the extent that it would fit on the hand of a human being (for example, in FIG. 2, a size having a length in the X-direction is 200 mm or less, a length in the Y-direction is 100 mm or less, and a length in the Z-direction is 100 mm or less) can be realized while outputting the high-output pulsed laser light L of elliptically polarized light.

The configuration of the laser oscillator 10 that is provided with a stacked structure of the plurality of heat sinks 14 and the plurality of laser media 15 and outputs the elliptically polarized pulsed laser light L is not limited to the aspect illustrated in FIG. 2. It is sufficient that the laser oscillator 10 provided with the stacked structure includes a pulse generation unit such as the Q switch element 12 and a resonator in addition to the stacked structure. For example, in the stacked body 11 illustrated in FIG. 2, the heat sink 14 on which the second coating layer 17 is formed may be further stacked on the laser medium 15 facing the Q switch element 12. In this case, the mirror 13 is not necessary. In the configuration illustrated in FIG. 2, the first coating layer 16 and the second coating layer 17 substantially function as the resonator. It is sufficient that the first coating layer 16 and the second coating layer 17 are arranged so that a constant resonator length is obtained therebetween. The number of the heat sinks 14 and the laser media 15 is not limited to the number illustrated in FIG. 2.

As illustrated in FIG. 2, the laser oscillator 10 may include a housing 18. An example of a material of the housing 18 is an aluminum alloy. The housing 18 includes a tubular portion 18a, and an end wall 18b that closes an opening on one side of the tubular portion 18a. The plurality of heat sinks (transparent heat transfer bodies) 14, the stacked body 11, the Q switch element 12, and the polarization adjustment element 19 are arranged inside the housing 18 so that an emission side of the pulsed laser light L (the polarization adjustment element 19 side in the configuration illustrated in FIG. 2) is located the other opening side (side opposite to the end wall 18b) in the tubular portion 18a. In this case, for example, as illustrated in FIG. 2, the optical fiber F is inserted into the end wall 18b, and the excitation light L0 is supplied to the stacked body 11.

For example, the size of the tubular portion 18a may be a size in which the plurality of heat sinks 14 are in contact with an inner surface of the tubular portion 18a, and an outer surface of the tubular portion 18a is in contact with the housing 6. In this case, heat generated in the laser medium 15 is efficiently transferred to water 4 through the heat sink 14, the housing 18, and the housing 6. Accordingly, the laser oscillator 10 can be efficiently cooled down by the water 4 inside the water injection unit 2.

A shape of the tubular portion 18a when viewed from the X-direction (a shape of a cross-section orthogonal to an axial line of the tubular portion 18a) may be the same as, for example, a shape of the heat sink 14. Examples of the shape of the tubular portion 18a when viewed from the X-direction include quadrangles (a rectangular shape, a square shape, and the like), and a circular shape. In the following description, in the aspect in which the laser oscillator 10 includes the housing 18, the heat sink 14 is in contact with the inner surface of the housing 18 unless otherwise stated.

The housing 6 illustrated in FIG. 1 is a hollow body that accommodates the laser oscillator 10. An example of a material of the housing 6 is an aluminum alloy. The housing 6 is disposed inside the water injection unit 2. Accordingly, the housing is hermetically sealed so that the water 4 inside the water injection unit 2 does not intrude into the housing 6.

The condensing lens 5 is attached to a front wall (wall on the injection port 2a side) of the housing 6. In this embodiment, the condensing lens 5 is a condensing unit that condenses the pulsed laser light L output from the laser oscillator 10. In FIG. 1, an aspect in which the condensing lens 5 is attached to the front wall of the housing 6 is exemplified. However, for example, the condensing lens 5 may be accommodated inside the housing 6, or a member transparent with respect to the pulsed laser light L may be disposed in the front wall.

In FIG. 1, the water injection unit 2 is held by a manipulator 102 attached to the workpiece 100 through a clamp 101, and a relative positional relationship with the processing region A in the workpiece 100 is adjusted by the manipulator 102.

Description will be given of a method of processing the processing region A by using the laser processing device 1 illustrated in FIG. 1. The water injection unit 2 is disposed so that the water 4 is injected from the water injection unit 2 toward the processing region A through operation of the manipulator 102. Then, the water 4 is injected from the injection port 2a toward the processing region A while supplying the water 4 into the water injection unit 2 through the pipe P. In this manner, while injecting the water 4, the pulsed laser light L is output from the laser oscillator 10 by supplying the excitation light L0 from the excitation unit 7. The pulsed laser light L is condensed by the condensing lens 5 and is emitted to the processing region A after passing through the inside of the water 4 injected from the injection port 2a. Since the water 4 is injected to the processing region A, the pulsed laser light L is emitted to the processing region A covered with the water 4. According to this, expansion of high-pressure plasma generated in the processing region A due to the irradiation with the pulsed laser light L is hindered by the water covering the processing region A. As a result, the high-pressure state of the plasma is maintained, and thus the processing region A is processed with the high-pressure plasma. That is, the laser peening process is performed with respect to the processing region A.

The laser peening process is a process of processing the processing region A by irradiating the processing region A with high-intensity pulsed laser light L through the water as described above. The inventors of the present application found that when intensity of the pulsed laser light exceeds a certain intensity (for example, 1 TW/m²), an acoustic lattice is formed in water due to an interaction between water molecules and laser light, and as a result, stimulated brillouin scattering (SBS) of the pulsed laser light occurs, and energy of the pulsed laser light cannot be effectively used. In addition, the present inventors have extensively studied for effectively using the energy of the pulsed laser light, and they found that a constant time is necessary in order for the acoustic lattice to be formed, and thus an influence of the SBS can be reduced by setting a pulse width of the pulsed laser light to 2 ns or less.

On the other hand, in order to perform the laser peening process, it is necessary to plastically deform the processing region A of the workpiece 100, and thus a certain lower limit value exists in the energy of the pulsed laser light L for a significant process. In a case where the energy of the pulsed laser light L is constant, the pulse width is inversely proportional to the peak intensity. Therefore, when shortening the pulse width, the peak intensity of the pulsed laser light L becomes high, and thus an electric field due to the pulsed laser light L is enlarged. As a result, dielectric breakdown of water occurs, and thus plasma of water is generated, the pulsed laser light L is scattered, and energy cannot be effectively used. When the pulse width of the pulsed laser light L is, for example, 200 ps or greater, the electric field of the pulsed laser light L is reduced, and an influence of the dielectric breakdown of the water can be reduced.

In the laser processing device 1, the pulsed laser light L having a pulse width of 200 ps to 2 ns is output from the laser oscillator 10. Accordingly, the influence of the SBS can be reduced, and thus the laser peening process can be performed by effectively using the energy of the pulsed laser light L.

In addition, the acoustic lattice is less likely to be formed with light of which a polarization state is unsteady (for example, non-linearly polarized light such as elliptically polarized light or unpolarized light) in comparison to linearly polarized light. The reason for this is that in light of which the polarization state is unsteady, an electric field direction of a laser varies in at least one of a temporal state and a spatial state, and thus a vibration direction of water molecules is likely to be disturbed. The laser oscillator 10 can output the pulsed laser light L of elliptically polarized light. Accordingly, when using the pulsed laser light L output from the laser oscillator 10, the influence of the SBS can be further reduced. As a result, the laser peening process can be performed by effectively using the energy of the pulsed laser light L.

From the viewpoint of suppressing formation of the acoustic lattice (as a result, suppressing the influence of the SBS), it is preferable that the pulse width is short. However, when the pulse width is excessively short, optical components such as a lens and a mirror may be damaged. In contrast, since the pulse width of the pulsed laser light L that is used in the laser peening process by the laser processing device 1 is, for example, 200 ps or greater, the laser peening process can be performed with respect to the processing region A while preventing damage or the like of the optical components such as the lens. Particularly, since the pulsed laser light L is elliptically polarized light in which the acoustic lattice is less likely to be formed, the pulse width is easily lengthened, and as a result, damage of the optical component can be more reliably prevented.

In a case where the pulsed laser light L is multi-mode laser light, the acoustic lattice is less likely to be formed. The reason for this is that a vibration direction of water molecules is likely to be disturbed due to various modes. Accordingly, in an embodiment in which the pulsed laser light L is the multi-mode laser light, the SBS is further reduced, and as a result, the energy of the pulsed laser light L can be effectively used. Also in this case, the pulse width is easily lengthened, and as a result, damage of the optical component such as the lens can be more reliably prevented.

In the laser processing device 1, the laser irradiation unit 3 is disposed inside the water injection unit (accommodation unit) 2, and thus the pulsed laser light L is emitted to the processing region A through the water 4 injected from the water injection unit 2. An operational effect of this configuration will be described while being compared with a case where the laser irradiation unit is disposed at the outside of the water injection unit.

In a case where the laser irradiation unit is disposed at the outside of the water injection unit, the processing region A is covered with water by water injection from a water injection unit to the processing region A or other methods, and pulsed laser light is emitted to the processing region A from an outer side (atmosphere side) of the water covering the processing region A through the water. Accordingly, energy of the pulsed laser light cannot be effectively used due to an influence of refraction and reflection of the pulsed laser light which occur at a boundary between water and the atmosphere.

In contrast, as illustrated in FIG. 1, in a case where the laser irradiation unit 3 is disposed inside the water injection unit 2, the pulsed laser light L propagates through the inside of the water 4 injected from the water injection unit 2 toward the processing region A. In this case, since refraction and reflection of light do not occur at a boundary between the atmosphere and water, the energy of the pulsed laser light L can be further effectively used.

As a laser processing device that performs the laser peening process, for example, a device that causes the pulsed laser light to propagate through the inside of an optical fiber, and irradiates the processing region A with the pulsed laser light output from an emission end of the optical fiber is also considered. Since the pulsed laser light output from the optical fiber is diffused light, a spread angle of the pulsed laser light output from the emission end of the optical fiber becomes 20° to 30° (23° if NA is 0.2). In addition, when increasing intensity of the pulsed laser light propagating through the inside of the optical fiber, the optical fiber may be damaged. Accordingly, in order to obtain intensity required for the laser peening process in the processing region A while avoiding the damage of the optical fiber, it is necessary for the pulsed laser light output from the optical fiber to be reduced and projected onto the processing region A. Accordingly, when using the optical fiber as described above, a laser irradiation head including an emission end of the optical fiber and a reduced projection optical system is used. In this case, a work distance (a distance from the laser irradiation head to the processing region A) decreases to a certain extent equal to a diameter of a convex lens or a concave mirror provided in the reduced projection optical system for reducing the pulsed laser light. As a result, when subjecting the processing region A of a complicated workpiece (for example, a three-dimensional workpiece) 100 to the laser peening process, arrangement of the laser irradiation head becomes difficult. In addition, in the reduced projection, the pulsed laser light is incident to the processing region A at a short focal distance (large incident angle), a focal margin (focal depth) decreases, and thus it is difficult to perform the laser peening process with respect to the complicated workpiece.

In contrast, in the laser processing device 1 illustrated in FIG. 1, the pulsed laser light L output from the laser oscillator 10 is condensed by the condensing lens 5 without causing the pulsed laser light L to propagate by using an optical fiber. In this case, it is not necessary to consider damage of the optical fiber, and thus it is possible to output the pulsed laser light L having higher intensity from the laser oscillator 10. Accordingly, the reduced projection optical system is not necessary, and a reduction in size of the laser irradiation head can be realized. In addition, the processing region A can be irradiated with the pulsed laser light L at a longer focal distance (large work distance) in comparison to the case of causing the pulsed laser light L to propagate through the inside of the optical fiber. As a result, the laser peening process of the complicated workpiece 100 is also easily performed.

In a case where the laser oscillator 10 has the configuration described with reference to FIG. 2, a reduction in size of the laser oscillator 10 is realized while the pulsed laser light L of high-intensity and elliptically polarized light can be output. In addition, for example, in the configuration described with reference to FIG. 2, the resonator length can be shortened, and thus the pulsed laser light L having a pulse width of 2 ns or less is easily realized.

Hereinbefore, the embodiment of the invention has been described, but the invention is not limited to the above-described embodiment, and various modifications can be made within a range not departing from the gist of the invention.

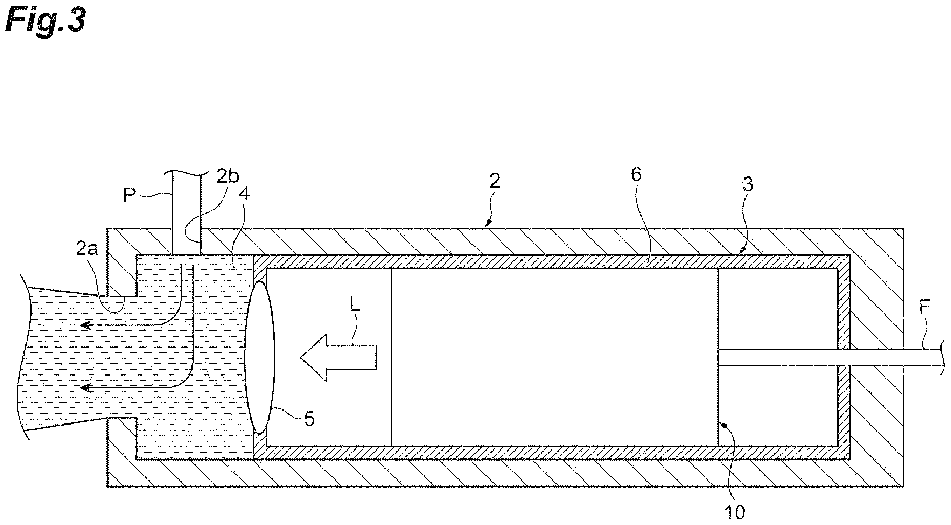

For example, as in a laser processing device 1A illustrated in FIG. 3, the pipe connection portion 2b provided in the water injection unit (accommodation unit) 2 may be provided on a front wall side (specifically, between the laser oscillator 10 and the front wall) having the injection port 2a. As illustrated in FIG. 3, the laser irradiation unit 3 can have a size in which an outer surface of the housing 6 is in contact with an inner surface of the water injection unit 2. In this case, the water 4 supplied from the pipe P to the water injection unit 2 fills a space between the laser irradiation unit 3 and the front wall having the injection port 2a, and is injected from the injection port 2a to the outside. In this case, a structure of the water injection unit 2 becomes simple, and a reduction in the manufacturing cost of the laser processing device 1A is realized.

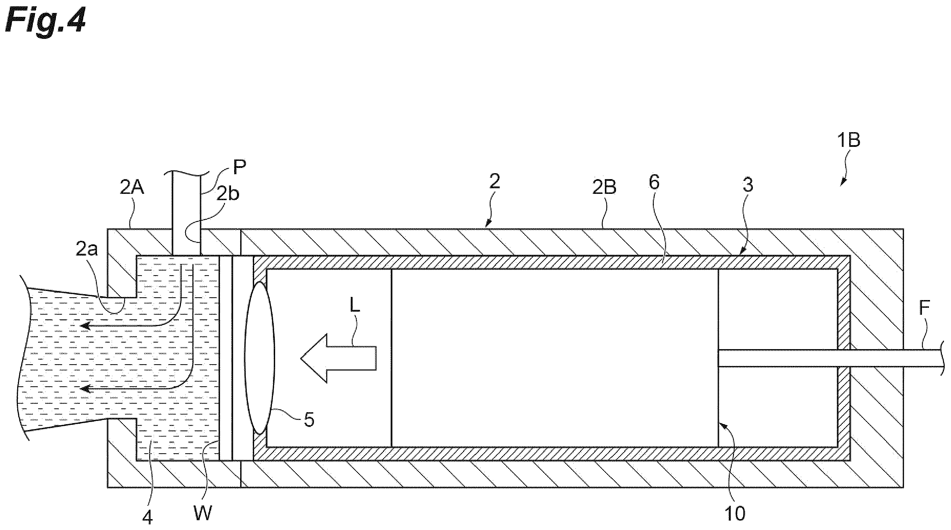

As in a laser processing device 1B illustrated in FIG. 4, the water injection unit (accommodation unit) 2 may include a first portion 2A on the injection port 2a side for the water 4 and a second portion 2B in which the laser irradiation unit 3 is disposed. An opening of the first portion 2A on the second portion 2B side is closed with an optical window W and the pipe connection portion 2b is provided in the first portion 2A. A material of the optical window W is a material through which the pulsed laser light L can be transmitted. For example, the material is a material transparent with respect to the pulsed laser light L. The first portion 2A and the second portion 2B may be removable. In this case, maintenance such as adjustment, replacement, and repair of the laser irradiation unit 3 (particularly, the laser oscillator 10) can be easily performed.

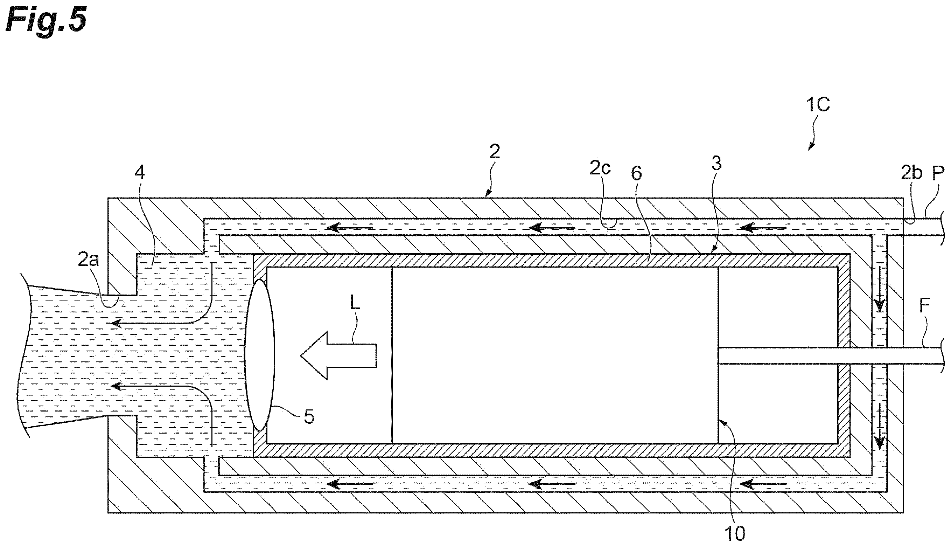

As in a laser processing device 1C illustrated in FIG. 5, in the water injection unit (accommodation unit) 2, a flow passage 2c through which water supplied from the pipe P flows may be formed within a wall portion that constitutes the water injection unit 2. For example, as illustrated in FIG. 5, in an aspect in which a pipe connection portion 2b is provided on a side opposite to the injection port 2a, the flow passage 2c may be formed to allow the water 4 to flow from the pipe connection portion 2b to the vicinity of the injection port 2a. In this case, in an aspect in which an outer surface of the housing 6 provided in the laser irradiation unit 3 has a size to be in contact with the inner surface of the water injection unit 2, after being used for cooling-down of the laser oscillator 10 inside the housing 6, the water 4 is supplied from the injection port 2a to the processing region A. Accordingly, cooling-down of the laser oscillator 10 can be efficiently performed. In this manner, in the case of cooling down the laser oscillator 10 with the water 4 flowing through the flow passage 2c, it is preferable that the laser oscillator 10 includes the housing 18 that is in contact with the inner surface of the housing 6 as the housing 18 illustrated in FIG. 2 or the heat sink 14 is disposed to be in contact with the inner surface of the housing 6.

As illustrated in FIG. 1, in an embodiment in which a laser irradiation unit is disposed in an accommodation unit capable of inj ecting a liquid, for example, it is sufficient that the laser processing device is configured in such a manner that the pulsed laser light from the laser irradiation unit is emitted to a processing region of a workpiece through the liquid injected from the accommodation unit having an injection port through which the liquid is injected.

The invention is also applicable to a case where the pulsed laser light is emitted to the processing region of the workpiece through the water to perform the laser forming process. As the liquid that is used in the laser peening process or the laser forming process, water is exemplified, but any liquid may be used as long as the liquid can confine a high pressure of plasma generated by irradiating the processing region with the pulsed laser light and can perform the laser peening process or the laser forming process.

With regard to laser light that is used in the laser processing method of performing the laser peening process or the laser forming process with respect to the processing region of the workpiece, when having intensity necessary for the laser peening process or the laser forming process and satisfying the following Condition 1, the SBS can be suppressed, and the laser peening process or the laser forming process can be efficiently performed. Further, when satisfying at least one of Condition 2 and Condition 3, the SBS can be more efficiently suppressed.

Condition 1: A pulse width of the pulsed laser light is 200 ps to 2 ns.

Condition 2: A polarization state of the pulsed laser light is unsteady.

Condition 3: The pulsed laser light is multi-mode laser light.

The laser light of which the polarization state is unsteady is laser light of which the polarization state varies in at least one of a temporal state or a spatial state. Examples of the laser light of which the polarization state is unsteady include elliptically polarized light or unpolarized laser light, an optical vortex, and a vector beam.

Accordingly, when the pulsed laser light satisfies the above-described Condition 1, or the pulsed laser light satisfies at least one of Condition 2 and Condition 3 while satisfying Condition 1, the laser irradiation unit may be disposed outside the water injection unit. In addition, the laser processing device for carrying out the laser peening process or the laser forming process may satisfy the above-described Condition 1, and when the laser processing device includes a laser irradiation unit capable of outputting the pulsed laser light satisfying at least one of Condition 2 and Condition 3, it is more effective. For example, in a case where the laser irradiation unit includes the polarization adjustment element 19 as illustrated in FIG. 2, the polarization adjustment element 19 is not limited to the λ/4 plate. For example, the polarization adjustment element 19 may be an element that converts linearly polarized laser light into unpolarized laser light, or may be a phase control element (for example, a phase plate, a liquid crystal on silicon (LCOS), or the like) configured to convert the linearly polarized laser light into an optical vortex or a vector beam. In contrast, in the configuration of the laser oscillator 10 illustrated in FIG. 2, for example, in a case where the stacked body 11 itself can generate unsteady laser light such as elliptically polarized light and unpolarized light, the laser irradiation unit 3 may not be provided with the polarization adjustment element 19. An arrangement position of the polarization adjustment element 19 is not limited to the position illustrated in FIG. 2 as long as the pulsed laser light L of which a polarization state is unsteady can be output from the laser irradiation unit 3. The same applies to the case of outputting the multi-mode pulsed laser light.

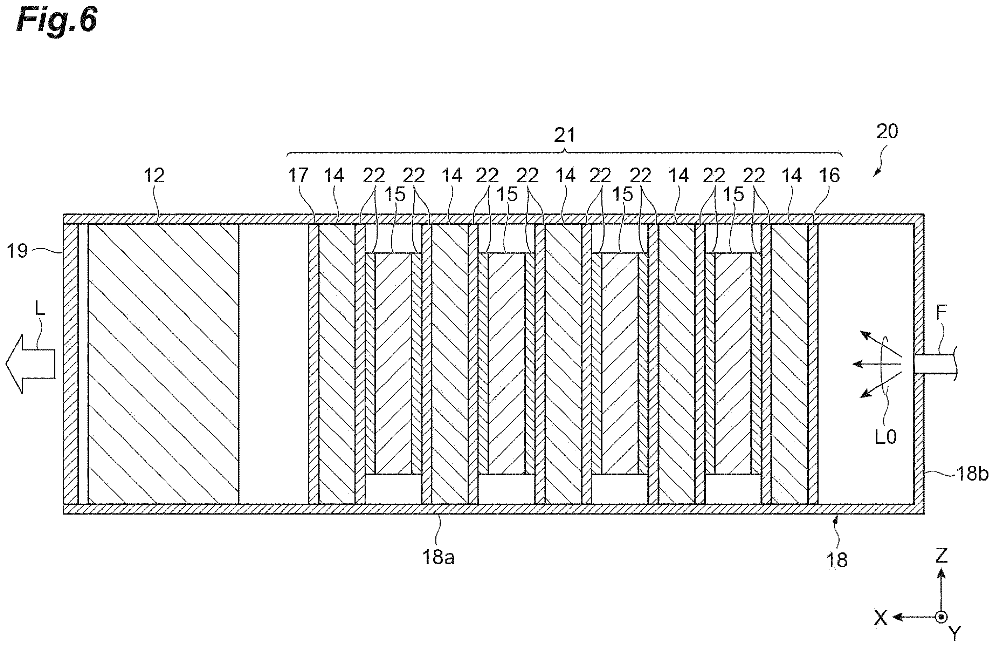

A laser oscillator 20 illustrated in FIG. 6 may be used instead of the laser oscillator 10 illustrated in FIG. 2. The laser oscillator 20 includes a stacked body 21, a Q switch element (pulse generation unit) 12, and a polarization adjustment element 19. In the laser oscillator 20 in FIG. 6, the mirror 13 (the mirror 13 disposed on a side opposite to the stacked body 11 when viewed from the Q switch element 12) provided in the laser oscillator 10 is not necessary. The laser oscillator 20 will be described with reference to FIG. 6. Even in description of FIG. 6, the X-direction, the Y-direction, and the Z-direction used in description of FIG. 2 may be used in some cases.

The stacked body 21 is different from the stacked body 11 mainly in that the plurality of heat sinks 14 and the plurality of laser media 15 are bonded at room temperature via an intermediate layer 22 alternately and stacked, and that the heat sinks 14 are arranged at both ends in the X-direction, and the second coating layer 17 is formed on a surface of the heat sink 14 facing the Q switch element 12. The stacked body 21 will be described with focus given to the difference.

The intermediate layer 22 is a buffer layer interposed between each of the heat sinks 14 and each of the laser media 15. A part of the intermediate layer 22 is formed integrally with the heat sink 14 and the laser medium 15. The part of the intermediate layer 22 is a central portion when viewed from the X-direction. The part of the intermediate layer 22 is transparent. The other part of the intermediate layer 22 is colored. The other part of the intermediate layer 22 is an outer edge portion (peripheral edge portion) when viewed from the X-direction. The other part of the intermediate layer 22 is opaque (non-transparent state as described above). For example, "opaque for light (specific light)" represents that a transmittance for the specific light is less than 77%.

The intermediate layer 22 is a layer having high chemical resistance, high corrosion resistance, and a high gas barrier property. The part of the intermediate layer 22 that is transparent and is formed integrally with the heat sink 14 and the laser medium 15 contains at least any one of a compound including a constituent element of a bonding side portion that is a boundary of the heat sink 14, and a compound including a constituent element of a bonding side portion that is a boundary of the laser medium 15. The other part of the intermediate layer 22 is formed from an element that can be substituted with the constituent element of at least one of the heat sink 14 and the laser medium 15.

The part of the intermediate layer 22 is a mixed crystal of the constituent element of the heat sink 14, the constituent element of the laser medium 15, and the constituent element of the other part of the intermediate layer 22. The part of the intermediate layer 22 is a portion formed by phase transition of the constituent element of the other part of the intermediate layer 22. Existence of the part of the intermediate layer 22 which is formed integrally with the heat sink 14 and the laser medium 15 can be grasped from an increase in a concentration of the constituent element of the intermediate layer 22 (the element of the other part of the intermediate layer 22).

**[Table 1]**

| Heat sink | Laser medium | Part of intermediate layer (transparent portion) | Other part of intermediate layer (colored portion) |
|---|---|---|---|
| | RE:RAG (R = Y, Sc, Lu, Gd, etc) | Mixed crystal of Al₂O₃ or RAG (3R₂O₃-5Al₂O₃), and Si | Si |
| | RE:RSiO₂ (R = Y, Sc, Lu, Gd) | Mixed crystal of Al₂O₃ or RSiO₂, and Si | Si |
| | RE:R₂SiO₅ (R = Y, Sc, Lu, Gd) | Mixed crystal of Al₂O₃ or R₂SiO₅, and Si | Si |
| | RE:Bi₄Si₃O₁₂ (R = Y, Ca, Sr, Sc, Lu, Gd) | Mixed crystal of Al₂O₃ or Bi₄Si₃O₁₂, and Si | Si |
| | RE:CaR₄(SiO₄)₃O (R = Y, La, Ca, Sr, Sc, Lu, Gd) | Mixed crystal of Al₂O₃ or CaR₄(SiO₄)O, and Si | Si |
| | RE:SrR₄(SiO₄)₃O (R = Y, La, Ca, Sr, Sc, Lu, Gd) | Mixed crystal of Al₂O₃ or SrR₄(SiO₄)O, and Si | Si |
| | RE:RAG (R = Y, Sc, Lu, Gd) | Mixed crystal by way of substitution with Al in Al₂O₃, or R in RAG (3R₂O₃-5Al₂O₃) | Al, Sc, Lu, Gd, Cr, Sm |
| | | Mixed crystal by way of substitution with Al in Al₂O₃ or RAG (3R₂O₃-SAl₂O₃) | Al, Sc, Lu, Gd, Cr, Sm |
| | RE:RAlO₃ (R = Y, Sc, Lu, Gd) | Mixed crystal by way of Si in Al₂O₃ or RAlO₃ | Si |
| | | Mixed crystal by way of substitution with Al in Al₂O₃, and R in RAlO₃ | Al, Sc, Lu, Gd, Cr, Sm |
| | | Mixed crystal by way of substitution with Al in Al₂O₃ or RAlO₃ | Al, Sc, Lu, Gd, Cr, Sm |
| Al₂O₃ | RE:RAl₄O₇ (R = Y, Ca, Sr, Sc, Lu, Gd) | Mixed crystal by way of Si in Al₂O₃ or RAl₄O₇ | Si |
| | | Mixed crystal by way of substitution with Al in Al₂O₃ or R in RAl₄O₇ | Al, Sc, Lu, Gd, Cr, Sm |
| | | Mixed crystal by way of substitution with Al in Al₂O₃ or RAl₄O₇ | Al, Sc, Lu, Gd, Cr, Sm |
| | RE:Y₃SCₓAl₍₅₋ₓ₎O₁₂ | Mixed crystal by way of Si in Al₂O₃ or Y₃ScₓAl₍₅₋ₓ₎O₁₂ | Si |
| | | Mixed crystal by way of substitution with Al in Al₂O₃ or Sc in Y₃ScₓAl₍₅₋ₓ₎O₁₂ | Al, Sc, Lu, Gd, Cr, Sm |
| | | Mixed crystal by way of substitution with Al in Al₂O₃ or Y₃ScₓAl₍₅₋ₓ₎O₁₂ | Al, Sc, Lu, Gd, Cr, Sm |
| | RE:RVO₄ (R = Y, Sc, Lu, Gd) | Mixed crystal with Al₂O₃, or Si, Al or the like when the coating end layer on the laser medium is a film containing Si or Al | Si, Al or the like |
| | RE:(s)FAP or RE:(s)VAP | Mixed crystal with Al₂O₃, or Si, Al or the like when the coating end layer on the laser medium is a film containing Si or Al | Si, Al or the like |
| | RE:RCOB (R = Y, Sc, Lu, Gd) | Mixed crystal with Al₂O₃, or Si, Al or the like when the coating end layer on the laser medium is a film containing Si or Al | Si, Al or the like |
| | RE:RLF (R = Y, Lu, etc.) | Mixed crystal with Al₂O₃, or Si, Al or the like when the coating end layer on the laser medium is a film containing Si or Al | Si, Al or the like |
| | RE:CaF₂, SrF₂, etc. | Mixed crystal with Al₂O₃, or Si, Al or the like when the coating end layer on the laser medium is a film containing Si or Al | Si, Al or the like |

Here,
RE = Added rare earth element such as Ce, Pr, Nd, Sm, Eu, Tb, Dy, Ho, Er, Tm, and Yb
TM = Added transition metal element such as Mg, Ca, Mn, Fe, Co, Ni, Cu, Zn, Cr, Ti, Te, Nb, and V

Coating end layer is located on the outermost surface side closest to a counterpart side (the laser medium 15 side or the heat sink 14 side) in a case where one or a plurality of coating layers are provided on at least one of the heat sink 14 on the laser medium 15 side and the laser medium 15 on the heat sink 14 side.

For example, the stacked body 21 may be manufactured as follows. First, a plurality of the heat sinks 14 and a plurality of the laser media 15 are prepared. The first coating layer 16 and the second coating layer 17 are appropriately formed on the heat sinks 14 as a film. In the film formation, various known film formation methods can be employed. Next, the intermediate layer 22 is formed on each of the heat sinks 14 and the laser media 15. For example, the intermediate layer 22 can be formed by a sputtering method, or a vapor deposition method. A material of the intermediate layer 22 in this stage contains an element that can be substituted with a constituent element of least one of the heat sink 14 and the laser medium 15, and is colored. As materials of the heat sink 14, the laser medium 15, and the intermediate layer 22 which are used include, materials shown in "Heat sink", "Laser medium", and "Other part of intermediate layer (colored portion)" in Table 1 can be exemplified.

Then, in a state where the intermediate layer 22 is disposed between the heat sink 14 and the laser medium 15, the heat sink 14 and the laser medium 15 are bonded to each other without adhesive while stacking (a plurality of them are arranged) the heat sink 14 and the laser medium 15 so as to be alternately arranged. As bonding between the heat sink 14 and the laser medium 15, the surface-activated room-temperature bonding can be used.

Next, the intermediate layer 22 is irradiated with giant pulsed laser light in order for the giant pulsed laser light to be absorbed to the intermediate layer 22. According to this, a shock wave is generated in the intermediate layer 22, the shock wave is pushed back by the heat sink 14 and the laser medium 15, and a momentary high-temperature and high-pressure state occurs in the intermediate layer 22. As a result, a central portion that is a part of the intermediate layer 22 diffuses or undergoes a phase transition into the heat sink 14 and the laser medium 15 which are bonding base materials, and the central portion is integrated with the heat sink 14 and the laser medium 15 and becomes transparent. On the other hand, edge portions which are the other part of the intermediate layer 22 remains colored.

The giant pulsed laser light is laser light capable of generating the shock wave. The giant pulsed laser light is laser light having a pulse width of sub-nanoseconds. The giant pulsed laser light is obtained by using a micro laser and a system thereof. For example, the giant pulsed laser light is laser light in a region in which a pulse width is 10 ns to 1 ps (particularly, 1 ns to 10 ps).

In the stacked body 21, laser light is emitted, and thus the stacked body 21 functions as a laser element. In the laser oscillator 20, laser light emitted from the stacked body 21 is pulsed by the Q switch element 12 that is a saturable absorber, and is output as the pulsed laser light L.

As illustrated in FIG. 6, the laser oscillator 20 may also include the housing 18. A configuration of the housing 18, and an arrangement state of the stacked body 21 and the Q switch element 12 inside the housing 18 may be similar to the case of the housing 18 provided in the laser oscillator 10.

The laser oscillator may be a laser oscillator using an unstable resonator. The laser oscillator using the unstable resonator is, for example, a first laser oscillator or a second laser oscillator to be described below.

The first laser oscillator includes a first reflection unit that allows light of a first wavelength to be transmitted therethrough and reflects light of a second wavelength different from the first wavelength, a second reflection unit that forms an unstable resonator in combination with the first reflection unit, is disposed to be spaced apart from the first reflection unit in one direction, and reflects the light of the second wavelength, a laser medium that is disposed between the first reflection unit and the second reflection unit, and emits the light of the second wavelength due to incidence of the light of the first wavelength, and a saturable absorption unit which is disposed on a side opposite to the first reflection unit when viewed from the laser medium in the one direction, and of which a transmittance increases in accordance with absorption of light. In the first laser oscillator, the first reflection unit has an incident surface to which the light of the first wavelength is incident on a side opposite to the laser medium, a size of the second reflection unit is smaller than a size of the first reflection unit when viewed from the one direction, at least a part of a surface of the saturable absorption unit on a side opposite to the laser medium has a curved region curved toward the laser medium side, and the second reflection unit is a dielectric multi-layer film provided on a surface of the curved region.

The second laser oscillator includes a first reflection unit that allows light of a first wavelength to be transmitted therethrough, and reflects light of a second wavelength different from the first wavelength, a second reflection unit that forms an unstable resonator in combination with the first reflection unit, is disposed to be spaced apart from the first reflection unit in one direction, and reflects the light of the second wavelength, a laser medium that is disposed between the first reflection unit and the second reflection unit, and emits the light of the second wavelength due to incidence of the light of the first wavelength, a saturable absorption unit which is disposed on a side opposite to the first reflection unit when viewed from the laser medium in the one direction, and of which a transmittance increases in accordance with absorption of light, and a support body that supports the second reflection unit and allows the light of the second wavelength to be transmitted therethrough. In the second laser oscillator, the first reflection unit has an incident surface to which the light of the first wavelength is incident on a side opposite to the laser medium, a size of the second reflection unit is smaller than a size of the first reflection unit when viewed from the one direction, at least a part of a surface of the support body on the saturable absorption unit side is a curved region curved toward the saturable absorption unit side, and the second reflection unit is a dielectric multi-layer film provided on a surface of the curved region. In one embodiment, the support body may be a plano-convex lens.

When viewed from the one direction, a size of the saturable absorption unit may be smaller than a size of the laser medium. When viewed from the one direction, a laser medium that emits the light of the second wavelength due to incidence of the light of the first wavelength may be provided at the periphery of the saturable absorption unit. The first reflection unit may be a planar mirror. The first reflection unit may be curved. The first reflection unit may be curved toward a side opposite to the laser medium. An opening through which laser light having the second wavelength passes may be formed in at least a part of a region in the first reflection unit, the region overlapping the second reflection unit when viewed from the one direction.

In one embodiment, the laser medium is made of ceramic or is a single crystal, the saturable absorption unit includes a saturable absorber that is made of ceramic or is a single crystal, the laser medium and the saturable absorption unit are bonded to each other, and the first reflection unit may be provided in the laser medium. In this embodiment, a length of a bonding direction of the laser medium and the saturable absorption unit in a bonded body of the laser medium and the saturable absorption unit may be shorter than 10 mm.

Alternatively, in one embodiment, the laser medium and the saturable absorption unit are bonded to each other, and the length of the bonding direction of the laser medium and the saturable absorption unit in the bonded body of the laser medium and the saturable absorption unit may be shorter than 10 mm, or may be shorter than a distance between the first reflection unit and the second reflection unit.

A radius of curvature of the second reflection unit may be 10 to 100 mm. A diameter of the second reflection unit may be 1 to 3 mm.

In one embodiment, each of the first laser oscillator and the second laser oscillator may include a lens that is disposed on a side opposite to the first reflection unit when viewed from the second reflection unit, and collimates light output from the unstable resonator. In this case, for example, a focal distance of the lens may be 30 to 200 mm.

The distance between the first reflection unit and the second reflection unit may be shorter than 15 mm.

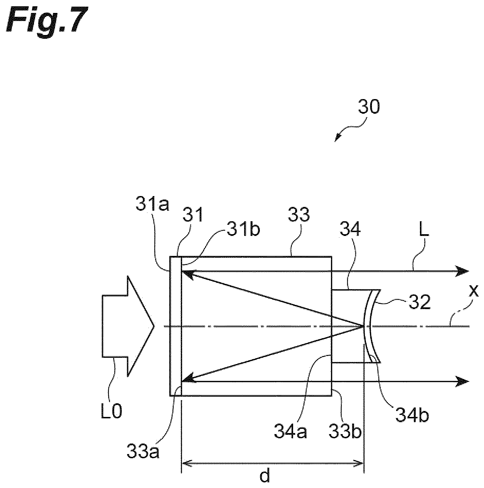

Next, an example of the laser oscillator using the unstable resonator will be described in detail with reference to FIG. 7 to FIG. 13. In FIG. 7, and FIG. 8 to FIG. 13, for example, a right side (output side of the pulsed laser light L) corresponds to a left side in FIG. 2.

As illustrated in FIG. 7, a laser oscillator (first laser oscillator) 30 includes, for example, a first reflection unit 31, a second reflection unit 32, a laser medium 33, and a Q switch element (saturable absorption unit) 34. The first reflection unit 31, the second reflection unit 32, the laser medium 33, and the Q switch element 34 are arranged in the order of the first reflection unit 31, the laser medium 33, the Q switch element 34, and the second reflection unit 32 along an x-axis. A direction of the x-axis corresponds to the X-direction illustrated in FIG. 1.

In the laser oscillator 30, when excitation light L0 supplied from the excitation unit 7 (refer to FIG. 1) is incident to the first reflection unit 31, the pulsed laser light L is output from the second reflection unit 32 side (right side in FIG. 7). For example, a wavelength (first wavelength) of the excitation light L0 is a wavelength of 808 nm or a wavelength of 885 nm when the laser medium 33 is Nd:YAG, and is a wavelength of 940 nm or a wavelength of 968 nm when the laser medium 33 is Yb:YAG. For example, a wavelength (second wavelength) of the pulsed laser light L is a wavelength of 1064 nm when the laser medium 33 is Nd:YAG, and is a wavelength of 1030 nm when the laser medium 33 is Yb:YAG. The wavelength of the excitation light L0 may be referred to as the first wavelength, and the wavelength of the pulsed laser light L may be referred to as the second wavelength.

The laser oscillator 30 may include an incident optical system in which the excitation light L0 output from the optical fiber F illustrated in FIG. 1 is condensed and is incident to the first reflection unit 31. Due to the incident optical system, for example, the excitation light L0 may be incident to the first reflection unit 31 as loosely condensed light close to collimated light or substantially collimated light.

### [First Reflection Unit]

The first reflection unit 31 is provided on a first end surface 33a of the laser medium 33. The first reflection unit 31 is a dielectric multi-layer film that allows the excitation light L0 of the first wavelength to be transmitted therethrough and reflects the light of the second wavelength. A transmittance of the first reflection unit 31 with respect to the excitation light L0 of the first wavelength is 80% or greater (preferably, 95% or greater), and a reflectance of the first reflection unit 31 with respect to the light of the second wavelength is 90% or greater (preferably, 99% or greater). For example, the first reflection unit 31 is a dielectric multi-layer film that functions as an AR coat with respect to the excitation light L0 of the first wavelength, and functions as an HR coat with respect to the light of the second wavelength. The first reflection unit 31 may be formed on the first end surface 33a by a thin film formation technology.

The first reflection unit 31 has a first surface (incident surface) 31a to which the excitation light L0 is incident, and a second surface 31b (surface opposite to the first surface 31a in the x-axis direction along which light propagates). The first surface 31a and the second surface 31b are flat surfaces orthogonal to the x-axis. Accordingly, the first reflection unit 31 is a planar mirror having the above-described transmission characteristics and reflection characteristics. However, the first reflection unit 31 may be a mirror (curved mirror) having curvature, or may be, for example, a concave mirror.

The second reflection unit 32 is disposed to be spaced apart from the first reflection unit 31 in the x-axis direction (one direction). The second reflection unit 32 is provided on a second end surface 34b of the Q switch element 34. The second reflection unit 32 is a dielectric multi-layer film that reflects the light of the second wavelength. A reflectance of the second reflection unit 32 with respect to the light of the second wavelength is 80% or greater (preferably, 99% or greater). For example, the second reflection unit 32 is a dielectric multi-layer film functioning as an HR coat with respect to the light of the second wavelength. The second reflection unit 32 can be formed on the second end surface 34b by a thin film formation technology.

The second reflection unit 32 forms an unstable resonator in combination with the first reflection unit 31. In an embodiment illustrated in FIG. 7, an optical axis of the unstable resonator formed by the first reflection unit 31 and the second reflection unit 32 matches the x-axis. When viewed from the x-axis direction, a size of the second reflection unit 32 is smaller than a size of the first reflection unit 31. In addition, the second reflection unit 32 is curved toward the first reflection unit 31 side. Since the second reflection unit 32 is curved as described above, the second reflection unit 32 causes the light of the second wavelength to diverge. Accordingly, the first reflection unit 31 and the second reflection unit 32 form a magnification optical system.

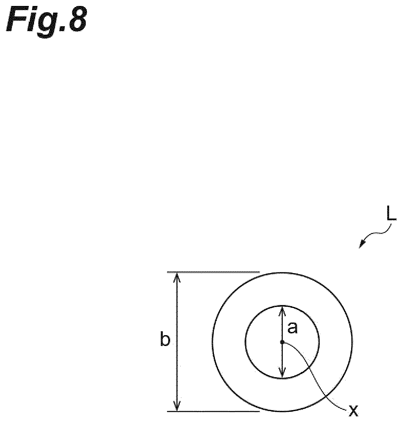

Since the first reflection unit 31 and the second reflection unit 32 forms the above-described unstable resonator, donut-shaped (donut mode) pulsed laser light L is output from the laser oscillator 30 as illustrated in FIG. 8. In a case where an inner diameter of the pulsed laser light L is set as "a", an outer diameter of the pulsed laser light L is set as "b", and a magnification rate m is defined as "b/a", the magnification rate m is, for example, 2^{1/2} to 3. The magnification rate m may be 1.2 to 3.

An example of distance (hereinafter, also referred to as "resonator length d") between a portion (a top portion of the second reflection unit 32) closest to the first reflection unit 31 in the second reflection unit 32, and the second surface 31b of the first reflection unit 31 is approximately 4 to 50 mm. The resonator length d may be shorter than 15 mm. When viewed from the x-axis direction, the second reflection unit 32 has a circular or polygonal shape, and for example, a diameter or a diagonal length thereof is 1 to 20 mm. A diameter or a diagonal length of the second reflection unit 32 may be 1 to 3 mm. An example of the radius of curvature of the second reflection unit 32 is 10 mm to 2 m. An example of the radius of curvature of the second reflection unit 32 may be 10 to 100 mm.

### [Laser Medium]

An example of a material of the laser medium 33 is similar to the laser medium 15. Examples of a shape of the laser medium 33 include a plate shape and a columnar shape. In the embodiment illustrated in FIG. 7, a central axis of the laser medium 33 matches the x-axis. The laser medium 33 has the first end surface 33a and a second end surface 33b (surface opposite to the first end surface 33a in the x-axis direction). The first end surface 33a and the second end surface 33b are orthogonal to the x-axis. An example of a length of the laser medium 33 along the x-axis direction is 0.2 to 26 mm.

Examples of the shape (shape in a plan view) of the laser medium 33 when viewed from the x-axis include a circular shape, a rectangular shape or a square shape, and a polygonal shape. In a case where the shape of the laser medium 33 in a plan view is the circular shape, an example of a diameter is 1.4 to 100 mm. In a case where the shape of the laser medium 33 in a plan view is the rectangular shape or the square shape, an example of an approximate diagonal length is 1.9 to 140 mm.

Hereinafter, a shape of an element when the element is viewed from the x-axis is referred to as "shape in a plan view" as described above.

The Q switch element 34 is a saturable absorber similar to the Q switch element 12. A transmittance of the Q switch element 34 increases in accordance with absorption of the light of the second wavelength. The Q switch element 34 may be disposed coaxially with the laser medium 33. The Q switch element 34 may be bonded to the second end surface 33b.

When viewed from the x-axis direction, a size of the Q switch element 34 is smaller in comparison to the laser medium 33. Examples of a shape of the Q switch element 34 include a plate shape, and a columnar shape. The Q switch element 34 has a first end surface 34a on the laser medium 33 side and the second end surface 34b (surface opposite to the first end surface 34a in the x-axis direction). The first end surface 34a is orthogonal to the x-axis. The second reflection unit 32 is provided on the second end surface 34b. Since the second reflection unit 32 is curved toward the first reflection unit 31 side, the second end surface 34b is also curved in a similar manner. A radius of curvature of the second end surface 34b is the same as the radius of curvature of the second reflection unit 32.

An example of a length of the Q switch element 34 along the x-axis direction is 0.1 to 10 mm.

As in the laser oscillator 30, in a case where the second reflection unit 32 is provided on the entire surface of the second end surface 34b, an example of a shape of the Q switch element 34 in a plan view is a circular shape or a polygonal shape, and an example of an equivalent diameter thereof is 1 to 20 mm.

The second reflection unit 32 may be provided on a part of the second end surface 34b. That is, the second reflection unit 32 may be partially coated on the second end surface 34b. In this case, the second end surface 34b has a curved region curved toward the first reflection unit 31 side at a part thereof, and the second reflection unit 32 is provided in the curved region. In an example in which the second reflection unit 32 is provided on a part of the second end surface 34b, examples of a shape of the Q switch element 34 in a plan view may include a circular shape, a rectangular shape or a square shape, and a polygonal shape. In a case where the shape of the Q switch element 34 in a plan view is the rectangular shape or the square shape, an example of the equivalent diagonal length is 1 to 20 mm.

A material of the Q switch element 34 may be a saturable absorber material having characteristics in which absorption capability is saturated when intensity of the light of the second wavelength that is incident increases. In description of the laser oscillator using the unstable resonator, the material of the Q switch element 34 is Cr:YAG ceramic, but may be a single crystal.

The Q switch element 34 may be manufactured in a state where the entire surface or a part of the second end surface 34b is curved, or may be manufactured by processing the entire surface or a part of the second end surface 34b to be curved after manufacturing the Q switch element 34 of which the second end surface 34b is a flat surface.

In a case where both the laser medium 33 and the Q switch element 34 are made of ceramic, for example, the laser medium 33 and the Q switch element 34 may be subjected to surface-activated bonding. The surface-activated bonding is a method in which an oxide film or a surface deposit of a bonding surface of a material to be bonded in vacuo is removed through ion beam irradiation or FAB (neutral atomic beam) irradiation, and bonding surfaces, that are flat and from which constituent elements have been exposed, are bonded to each other. The bonding is direct bonding using intermolecular bonds. The laser medium is not limited to ceramic as long as bonding is the surface-activated bonding, and single crystals or hybrids thereof can be employed, and bonding after performing excitation light reflection coating or the like is also possible. In the case of forming a bonded body by bonding the laser medium 33 and the Q switch element 34, a length (corresponding to a length in the x-axis direction) in a bonding direction of the laser medium 33 and the Q switch element 34 is shorter than, for example, 10 mm.

A coating layer configured to adjust reflection characteristics (for example, reflection characteristics of the light of the second wavelength) on the second end surface 33b and the first end surface 34a may be provided on at least one of the second end surface 33b of the laser medium 33 and the first end surface 34a of the Q switch element 34. In a case where the coating layer is provided on at least one of the second end surface 33b and the first end surface 34a, for example, the laser medium 33 and the Q switch element 34 may be bonded to each other as described above through the coating layer. A coating layer that functions as an HR coat with respect to the excitation light L0 of the first wavelength and functions as an AR coat with respect to the light of the second wavelength may be provided on at least one of the first end surface 34a and the second end surface 34b of the Q switch element 34. The coating layer may be a part of the saturable absorption unit. That is, the saturable absorption unit may include the coating layer in addition to the saturable absorber (the Q switch element 34 in FIG. 7), and in a case where the coating layer is provided on the end surface of the saturable absorber, an end surface of the coating layer corresponds to the end surface of the saturable absorption unit.

In the laser oscillator 30, a length of the laser medium 33 and the Q switch element 34 in the x-axis direction, a shape of the second reflection unit 32, and the like (particularly, a size, a radius of curvature, and the like of the second reflection unit 32) may be set so that a desired donut-shaped pulsed laser light L is obtained in consideration of the resonator length d, a gain, and the like. For example, the length of the laser medium 33 and the Q switch element 34 in the x-axis direction, and the shape of the second reflection unit 32 may be set so that the magnification rate m becomes 2^{1/2} to 3, or 1.2 to 3.

In the laser oscillator 30, when the excitation light L0 is incident to the first surface 31a of the first reflection unit 31, the excitation light L0 is transmitted through the first reflection unit 31, and is supplied to the laser medium 33. According to this, the laser medium 33 is excited, and the light of the second wavelength is emitted. The light of the second wavelength emitted from the laser medium 33 is reflected toward the first reflection unit 31 side by the second reflection unit 32. The first reflection unit 31 reflects the light of the second wavelength. According to this, the light of the second wavelength passes through the laser medium 33 a plurality of times. The light of the second wavelength is amplified due to stimulated emission when the light of the second wavelength passes through the laser medium 33, and is output as the pulsed laser light L due to operation of the Q switch element 34.

Since the second reflection unit 32 reflects the light of the second wavelength, the light of the second wavelength is not substantially transmitted through the second reflection unit 32. Since the second reflection unit 32 is curved toward the first reflection unit 31 side, the light of the second wavelength reflected from the second reflection unit 32 diverges. Accordingly, when viewed from the x-axis direction, the pulsed laser light L is output from an outer side of the second reflection unit 32. As a result, a shape (an intensity distribution) of the pulsed laser light L is a donut-shape as illustrated in FIG. 8. That is, the laser oscillator 30 can output the donut-shaped pulsed laser light L.

The light of the second wavelength reflected from the second reflection unit 32 diverges. Accordingly, the light of the second wavelength passes through a wider region of the laser medium 33 in comparison to a case where both the first reflection unit and the second reflection unit are planar mirrors. According to this, it is easy for a large amount of stimulated emission to occur from the laser medium 33, the pulsed laser light L having higher output as compared with a case where both the first reflection unit and the second reflection unit are planar mirrors can be obtain when the excitation area is the same. In this case, although the output of the pulsed laser light L is increased, an improvement of the output of the pulsed laser light L can be realized while suppressing deterioration of beam quality (M²) by actively selecting a donut-shaped beam and by removing a gain shift to a higher-order mode in comparison to a donut mode. That is, in the laser oscillator 30, an improvement of the output can be realized while suppressing deterioration of beam quality. Accordingly, it is effective for the laser peening process.

In the laser oscillator 30, since the first reflection unit 31 functions as a planar mirror, the light of the second wavelength transferred from the second reflection unit 32 is likely to diverge even when being reflected from the first reflection unit 31. However, in the case of end surface excitation as in the laser oscillator 30, a thermal lens effect caused by a quantum defect associated with excitation occurs. Accordingly, the light of the second wavelength that is reflected from the second reflection unit 32 and is further reflected from the first reflection unit 31 can be confined due to the thermal lens effect in comparison to a case where the thermal lens effect does not exist. Accordingly, even in a case where the first reflection unit 31 is a planar mirror, the unstable resonator is formed by the first reflection unit 31 and the second reflection unit 32, and laser oscillation becomes possible. Accordingly, in the laser oscillator 30, the length of the laser medium 33 and the Q switch element 34 in the x-axis direction, the shape of the second reflection unit 32, and the like may be set in additional consideration of the thermal lens effect inside the laser medium 33 due to the excitation light L0.

In the example in which the first reflection unit 31 is provided on the first end surface 33a, and the first reflection unit 31 is a planar mirror, since the first end surface 33a may also be a flat surface, processing of the laser medium 33 is easy. In addition, when using the thermal lens effect, the pulsed laser light L can be output, for example, as collimated light while suppressing divergence thereof.

Since the second reflection unit 32 is a dielectric multi-layer film, even when light of the second wavelength having the high-intensity is incident to the second reflection unit 32, damage of the second reflection unit 32 can be prevented. As a result, stable and high-output pulsed laser light L can be output.

The first reflection unit 31 is provided on the first end surface 33a of the laser medium 33, and the second reflection unit 32 is provided on the second end surface 34b of the Q switch element 34. Accordingly, the resonator length d can be shortened, and thus a reduction in size of the laser oscillator 30 and the laser irradiation unit 3 including the laser oscillator 30 is realized, and pulse shortening realized.

The laser medium 33 and the Q switch element 34 are made of ceramic, and when these members are bonded to each other, the resonator length d can be shortened. As a result, a reduction in size of the laser oscillator 30 and the laser irradiation unit 3 including the laser oscillator 30 is possible. In addition, as described above, high-output (or high-energy) pulsed laser light L can be output. Accordingly, it is effective for the laser peening process.

Since the unstable resonator formed by the first reflection unit 31 and the second reflection unit 32 is a magnification optical system, in a case where the magnification rate m of the pulsed laser light L output from the laser oscillator 30 is defined by "b/a" as illustrated in FIG. 8, the magnification rate m is, for example, 2^{1/2} or greater. When the magnification rate m is excessively large, a laser oscillation threshold value increases, and laser oscillation is less likely to occur. Accordingly, in the laser oscillator 30, for example, it is preferable that the size, the radius of curvature, and the like of the second reflection unit 32 is set so that the magnification rate m becomes 3 or less. When the magnification rate m is 3 or less, even in a case where the unstable resonator formed by the first reflection unit 31 and the second reflection unit 32 is the magnification optical system, the laser oscillation threshold value can be lowered. 1-m⁻² represents a reciprocal loss in a resonator. For example, in a case where m is 2^{1/2}, the reciprocal loss is 50%.

In an embodiment in which LD18A that outputs the excitation light L0 is oscillated in a quasi-continuous wave manner, and the excitation light L0 is pulsed light, heat generation of the laser medium 33 can be suppressed while realizing high output of the pulsed laser light L by using the high-output excitation light L0.

Next, various modification examples of the laser oscillator 30 will be described.

### (First Modification Example)

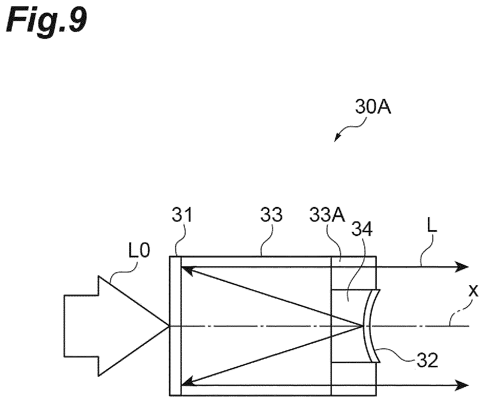

A laser oscillator 30A according to a first modification example is different from the laser oscillator 30 mainly in that a laser medium 33A is further provided at the periphery of the Q switch element 34 as illustrated in FIG. 9. The laser oscillator 30 will be described with focus given to the difference.

The laser medium 33A surrounds the periphery of the Q switch element 34 when viewed from the x-axis direction. A material of the laser medium 33A is the same as the material of the laser medium 33. Accordingly, the laser medium 33A emits the light of the second wavelength due to incidence of the excitation light L0.

The laser medium 33A may be bonded to the Q switch element 34. This case corresponds to an embodiment in which a composite component of the laser medium 33 and the Q switch element 34 is disposed on the second end surface 33b side of the laser medium 33. Alternatively, since the laser medium 33A and the laser medium 33 are formed from the same material, the laser medium 33A and the laser medium 33 may be one member. This case corresponds to an embodiment in which a concave portion is provided in an end surface opposite to the first reflection unit 31 in one laser medium, and the Q switch element 34 is accommodated in the concave portion.

The laser oscillator 30A has at least the same operational effect as in the laser oscillator 30. The laser medium 33A provided in the laser oscillator 30A surrounds the periphery of the Q switch element 34 when viewed from the x-axis direction. Accordingly, the pulsed laser light L further passes through the laser medium 33A. When the excitation light L0 is incident to the first reflection unit 31 such that the excitation light L0 is also incident to the laser medium 33A at the time of incidence of the excitation light L0 to the first reflection unit 31 (for example, when the excitation light L0 is incident to approximately the entire surface of the first surface 31a), the laser medium 33A is also excited by the excitation light L0. Accordingly, when the pulsed laser light L passes through the laser medium 33A, the pulsed laser light L is further amplified. As a result, in the laser oscillator 30A, an output is further improved.

### (Second Modification Example)

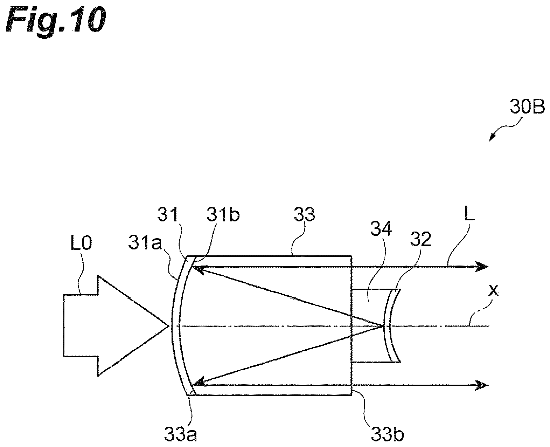

A laser oscillator 30B according to a second modification example is different from the laser oscillator 30 in that the first reflection unit 31 is curved toward an outer side (a side opposite to the laser medium 33) as illustrated in FIG. 10. The laser oscillator 30B will be described with focus given to the difference.

The first reflection unit 31 is curved toward an outer side. A radius of curvature of the first reflection unit 31 may be set so that a desired donut shape is obtained in consideration of the thermal lens effect inside the laser medium 33 due to the excitation light L0, the resonator length d, a gain, a size and a radius of curvature of the second reflection unit 32, and the like. For example, the radius of curvature of the first reflection unit 31 may be set so that the magnification rate m is 2^{1/2} to 3. An example of the radius of curvature of the first reflection unit 31 is 1.4 to 9 mm.

Since the first reflection unit 31 is provided on the first end surface 33a of the laser medium 33, the first end surface 33a is also curved like the first reflection unit 31 in the laser oscillator 30B. A radius of curvature of the first end surface 33a is similar to the radius of curvature of the first reflection unit 31.

The laser oscillator 30B has at least the same operational effect as in the laser oscillator 30. In the laser oscillator 30B, since the first reflection unit 31 is curved toward an outer side, the first reflection unit 31 functions as a concave mirror with respect to the light of the second wavelength reflected from the second reflection unit 32. That is, the first reflection unit 31 has a condensing function with respect to the light of the second wavelength reflected from the second reflection unit 32. Accordingly, the light of the second wavelength is likely confined inside the unstable resonator. Since the first reflection unit 31 has the above-described condensing function, divergence of the pulsed laser light L is likely to be suppressed, and for example, the pulsed laser light L is likely output as collimated light.

### (Third Modification Example)

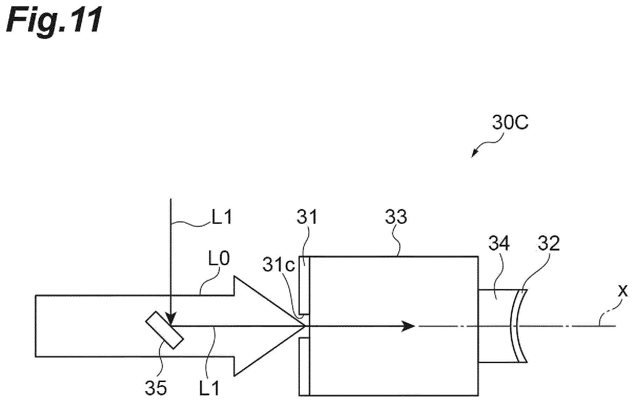

A laser oscillator 30C according to a third modification example is different from the laser oscillator 30 in that the first reflection unit 31 has an opening 31c as illustrated in FIG. 11. The laser oscillator 30C will be described with focus given to the difference.

The first reflection unit 31 has the opening 31c through which injection laser light L1 having a second wavelength is injected to the laser medium 33. The opening 31c is formed in at least a part of a region overlapping the second reflection unit 32 when viewed from the x-axis direction. As illustrated in FIG. 5, the opening 31c may be disposed on the x-axis.

The injection laser light L1 is laser light for injection synchronization. For example, a size of an end surface orthogonal to a propagation direction of the injection laser light L1 may be equal to or less than a size of the opening 31c. In this case, the injection laser light L1 can pass through the opening 31c without being reflected from the first reflection unit 31, and can be incident to the laser medium 33.

The injection laser light L1 may be supplied from an injection laser light supply unit supplying the injection laser light L1 through an optical fiber in a similar manner as in the case of the excitation light L0. The injection laser light supply unit only needs to be able to output the injection laser light L1 at injection timing for injection synchronization.

As illustrated in FIG. 11, in an embodiment in which the excitation light L0 is incident to the first reflection unit 31 after causing the excitation light L0 to propagate along the x-axis, the injection laser light L1 may be reflected by a reflection mirror 35 disposed on an optical path (on the x-axis in FIG. 11) of the excitation light L0 to be incident into the opening 31c. Since the reflection mirror 35 blocks partial propagation of the excitation light L0, the reflection mirror 35 is preferably smaller.

In the embodiment illustrated in FIG. 11, for example, in a case where the reflection mirror 35 has wavelength selectivity of allowing the excitation light L0 to be transmitted therethrough, and reflecting the injection laser light L1, the size of the reflection mirror 35 is not limited.

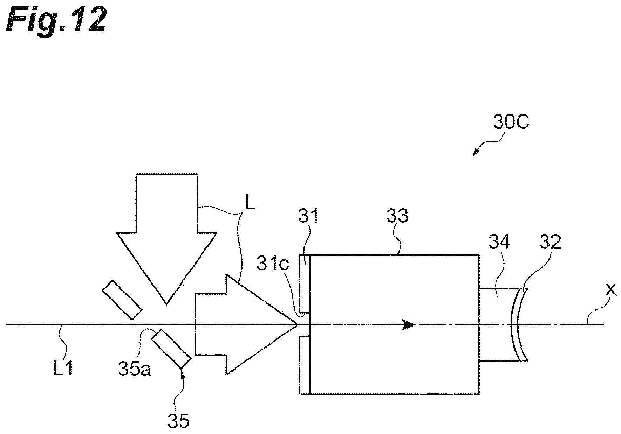

As illustrated in FIG. 12, the injection laser light L1 may be incident into the opening 31c after being caused to propagate along the x-axis, and the excitation light L0 may be incident to the first reflection unit 31 after being reflected by the reflection mirror 35. In an embodiment illustrated in FIG. 12, the reflection mirror 35 reflects the excitation light L0, and has an opening 35a through which the injection laser light L1 passes. An example of a size of the opening 35a is approximately the same as or slightly larger than a size of the cross section orthogonal to the injection laser light L1. According to this, the laser medium 33 can be excited by effectively using the excitation light L0. In the embodiment illustrated in FIG. 12, in a case where the reflection mirror 35 has, for example, wavelength selectivity to transmit the injection laser light L1 while reflecting the excitation light L0, the size of the reflection mirror 35 is not limited.

The laser oscillator 30C has at least similar operational effect as in the laser oscillator 30. In the laser oscillator 30C, injection synchronization is realized by injecting the injection laser light L1 to the laser medium 33. As a result, a jitter of the laser oscillator 30C can be controlled, and thus, for example, synchronization with an external device, and synchronization with a plurality of Q switch type laser oscillators are realized.

The second reflection unit 32 of the laser oscillator 30C reflects the light of the second wavelength, and does not substantially allow the light of the second wavelength to be transmitted therethrough. In the laser oscillator 30C, the opening 31c is provided in the first reflection unit 31 as illustrated in FIG. 11 and FIG. 12. Accordingly, the injection laser light L1 is likely to be injected to the laser medium 33. The laser oscillator 30C has a configuration in which high output is possible while suppressing beam quality deterioration, and control of the jitter is easy.

In the third modification example, the reflection mirror 35 may also be a part of the laser oscillator 30C.

### (Fourth Modification Example)

The size of the Q switch element 34 may be the same as the size of the laser medium 33 when viewed from the x-axis direction. In this case, the second end surface 34b may have a curved region curved toward the first reflection unit 31 side at a part (for example, a central portion), and the second reflection unit 32 may be provided in the curved region. That is, the second reflection unit 32 may be partially coated on the second end surface 34b. A laser oscillator according to the fourth modification example also has at least similar operational effect as in the laser oscillator 30.

### (Fifth Modification Example)

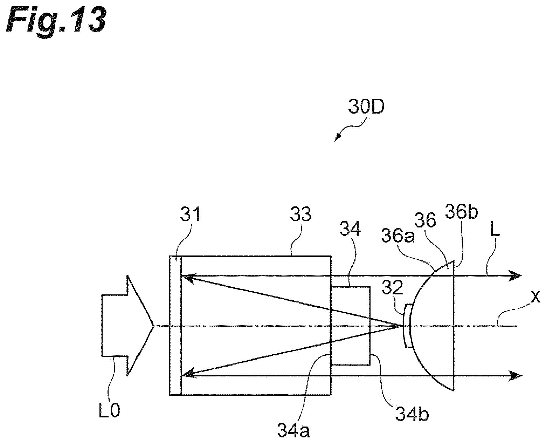

A laser oscillator 30D (second laser oscillator) according to a fifth modification example will be described with reference to FIG. 13. The laser oscillator 30D is different from the laser oscillator 30 in that the second reflection unit 32 is not provided on the second end surface 34b of the Q switch element 34. The laser oscillator 30D will be described with focus given to the difference.

The laser oscillator 30D includes a support body 36 that supports the second reflection unit 32. The support body 36 allows the light of the second wavelength (pulsed laser light L) to be transmitted therethrough. A transmittance of the support body 36 with respect to the light of the second wavelength is 90% or greater. Examples of a material of the support body 36 include glass.

A surface 36a of the support body 36 on the Q switch element 34 side is a curved region curved toward the Q switch element 34 side. A radius of curvature of the surface 36a of the support body 36 is similar to the radius of curvature of the second reflection unit 32. A surface 36b of the support body 36 on a side opposite to the Q switch element 34 may be a flat surface. Examples of the support body 36 include a plano-convex lens. An AR coat with respect to the light of the second wavelength may be provided on the curved surface 36a. The AR coat may also be a part of the support body 36.

The second reflection unit 32 is provided at a top portion (intersection portion between the x-axis and the surface 36a) of the surface 36a of the support body 36. That is, the second reflection unit 32 is partially coated on the surface 36a. The second reflection unit 32 may be formed by a thin film formation technology.

The Q switch element 34 has a similar configuration as in the case of the laser oscillator 30 except that the second end surface 34b is a flat surface. The first reflection unit 31 and the laser medium 33 have a similar configuration as in the case of the laser oscillator 30.

Even in the laser oscillator 30D, the first reflection unit 31 and the second reflection unit 32 constitute the unstable resonator as in the case of the laser oscillator 30. Accordingly, the laser oscillator 30D has at least similar operational effect as in the laser oscillator 30.

Since the second reflection unit 32 is a dielectric multi-layer film, even when the high-intensity light of the second wavelength is incident to the second reflection unit 32, damage of the second reflection unit 32 can be prevented. As a result, stable and high-output pulsed laser light L can be output.

In a case where the support body 36 is a plano-convex lens, the support body 36 has a condensing function with respect to the pulsed laser light L. Accordingly, even in a case where the pulsed laser light L incident to the support body 36 diverges, the divergence can be suppressed, and the pulsed laser light L can be output as collimated light, for example, due to an operation of the support body 36.

A similar modification as in the first to third modification examples is also applicable to the laser oscillator 30D. That is, the Q switch element 34 may be surrounded by the laser medium 33A (refer to FIG. 9) when viewed from the x-axis direction in a similar manner as in the case of the first modification example. The first reflection unit 31 may be curved toward a side opposite to the Q switch element 34 in a similar manner as in the case of the second modification example (refer to FIG. 10). The first reflection unit 31 may have the opening 31c (refer to FIG. 11 and FIG. 12) through which the injection laser light L1 is incident to the laser medium 33 in a similar manner as in the case of the third modification example. In a case where the similar modification as in the first to third modification examples is applied to the laser oscillator 30D, the laser oscillator to which each modification example is applied has the operational effect according to the respective modifications as in the cases of the first to third modification examples.

The support body 36 is not limited to the shape described with reference to FIG. 13. For example, the support body 36 may be a flat plate through which light of the second wavelength can be transmitted, and a curved region curved toward the Q switch element 34 side may be provided at a part of a surface on the Q switch element 34 side. In this case, the second reflection unit 32 is provided in the curved region.

Even in the fifth modification example, the size of the Q switch element 34 may be similar to the size of the laser medium 33 when viewed from the x-axis direction as in the fourth modification example. In this case, for example, position adjustment between the laser medium 33 and the Q switch element 34 is easy. In a case where the laser medium 33 and the Q switch element 34 are bonded to form one component (hereinafter, referred to as "optical component" for convenience of explanation), if the size of the Q switch element 34 is the same as the size of the laser medium 33 when viewed from the x-axis direction, a plurality of the optical components are easily manufactured. For example, the plurality of optical components are manufactured as follows. A laser medium and a Q switch element which have a size greater that a size of each optical component are bonded to each other to manufacture a stacked body of the laser medium and the Q switch element. Then, an optical component having a desired size is cut out from the stacked body, thereby obtaining the plurality of optical components. In this case, mass production of the optical component is possible, and thus manufacturing of the laser oscillator is easy, and a reduction in the manufacturing cost can be realized. The second reflection unit 32 and the Q switch element 34 may be in contact with each other.

Various laser oscillators using the exemplified unstable resonator may further include the polarization adjustment element 19 (refer to FIG. 2). Various laser oscillators using the exemplified unstable resonator may further include the housing 18 (refer to FIG. 2). Various laser oscillators using the exemplified unstable resonator may include a lens configured to collimate light output from the unstable resonator.

### Reference Signs List

1, 1A, 1B, 1C: laser processing device, 2: water injection unit (accommodation unit), 2a: injection port, 3: laser irradiation unit, 4: water (liquid), 5: condensing lens (condensing unit), 10, 30, 30A, 30B, 30C, 30D: laser oscillator, L: pulsed laser light.

## Claims

1. A laser processing device that irradiates a processing region of a workpiece with pulsed laser light through a liquid to subject the processing region to a laser peening process or a laser forming process, comprising:
a laser irradiation unit (3) including a laser oscillator (10); and
a water injection unit (2) that includes an injection port (2a) through which the liquid is injected to the processing region, and accommodates the laser irradiation unit,
wherein, in use, the pulsed laser light output from the laser oscillator (10) is emitted to the processing region through a liquid that is injected from the injection port, and
wherein the laser processing device is **characterized in that** the laser oscillator is configured to output pulsed laser light having a pulse width of 200 ps to 2 ns.

2. The laser processing device according to claim 1,
wherein the laser irradiation unit includes a condensing unit (5) that condenses the pulsed laser light generated by the laser oscillator (10) to the processing region.

3. The laser processing device according to claim 1 or 2,
wherein the laser oscillator (10) has means that allows a laser light to be in a polarization state that is unsteady so that the laser oscillator outputs the pulsed laser light having an unsteady polarization state.

4. A laser processing method of subjecting a processing region to a laser peening process or a laser forming process using the laser processing device according to claim 1, wherein, during the laser peening or laser forming process, the pulsed laser light output from the laser oscillator is laser light of which a polarization state is unsteady, or is multi-mode laser light.

## Patentansprüche

1. Laserbearbeitungsvorrichtung, die einen Bearbeitungsbereich eines Werkstücks mit gepulstem Laserlicht durch eine Flüssigkeit bestrahlt, um den Bearbeitungsbereich einem Laserpeeningprozess oder einem Laserumformprozess zu unterziehen, umfassend:
eine Laserbestrahlungseinheit (3), die einen Laseroszillator (10) einschließt; und
eine Wasserinjektionseinheit (2), die einen Injektionsanschluss (2a) einschließt, durch den die Flüssigkeit in den Verarbeitungsbereich injiziert wird, und die die Laserbestrahlungseinheit aufnimmt,
wobei das gepulste Laserlicht, das vom Laseroszillator (10) abgegeben wird, bei Verwendung durch eine Flüssigkeit, die aus dem Injektionsanschluss injiziert wird, in den Verarbeitungsbereich ausgestrahlt wird, und
wobei die Laserbearbeitungsvorrichtung **dadurch gekennzeichnet ist, dass** der Laseroszillator so ausgebildet ist, dass er gepulstes Laserlicht abgibt, das eine Pulsbreite von 200 ps bis 2 ns aufweist.

2. Laserbearbeitungsvorrichtung nach Anspruch 1,
wobei die Laserbestrahlungseinheit eine Kondensationseinheit (5) einschließt, die das vom Laseroszillator (10) erzeugte gepulste Laserlicht in den Verarbeitungsbereich fokussiert.

3. Laserbearbeitungsvorrichtung nach Anspruch 1 oder 2,
wobei der Laseroszillator (10) Mittel aufweist, die es ermöglichen, dass sich ein Laserlicht in einem instabilen Polarisationszustand befindet, sodass der Laseroszillator das gepulste Laserlicht mit einem instabilen Polarisationszustand abgibt.

4. Laserbearbeitungsverfahren zum Beaufschlagen eines Bearbeitungsbereichs mit einem Laserpeeningprozess oder einem Laserumformprozess unter Verwendung der Laserbearbeitungsvorrichtung nach Anspruch 1, wobei, während des Laserpeening- oder Laserumformprozesses, das von dem Laseroszillator abgegebene gepulste Laserlicht Laserlicht, dessen Polarisationszustand instabil ist, oder Multimodus-Laserlicht ist.

## Revendications

1. Dispositif de traitement laser qui irradie une région de traitement d'une pièce avec une lumière laser pulsée à travers un liquide pour soumettre la région de traitement à un procédé de choc laser ou à un procédé de formage au laser, comprenant :
une unité d'émission laser (3) incluant un oscillateur laser (10) ; et
une unité d'injection d'eau (2) qui inclut un orifice d'injection (2a) à travers lequel le liquide est injecté dans la région de traitement, et reçoit l'unité d'émission laser,
dans lequel, en utilisation, la lumière laser pulsée délivrée en sortie de l'oscillateur laser (10) est émise vers la région de traitement à travers un liquide qui est injecté à partir de l'orifice d'injection, et
dans lequel le dispositif de traitement laser est **caractérisé en ce que** l'oscillateur laser est configuré pour délivrer en sortie une lumière laser pulsée présentant une largeur d'impulsion de 200 ps à 2 ns.

2. Dispositif de traitement laser selon la revendication 1,
dans lequel l'unité d'émission laser inclut une unité de condensation (5) qui condense la lumière laser pulsée générée par l'oscillateur laser (10) dans la région de traitement.

3. Dispositif de traitement laser selon la revendication 1 ou la revendication 2,
dans lequel l'oscillateur laser (10) présente un moyen qui permet à une lumière laser d'être dans un état de polarisation qui est instable de sorte que l'oscillateur laser délivre en sortie la lumière laser pulsée présentant un état de polarisation instable.

4. Procédé de traitement laser consistant à soumettre une région de traitement à un procédé de choc laser ou à un procédé de formage au laser en utilisant le dispositif de traitement laser selon la revendication 1, dans lequel, pendant le procédé de choc laser ou de formage au laser, la lumière laser pulsée délivrée en sortie de l'oscillateur laser est une lumière laser dont un état de polarisation est instable, ou est une lumière laser multimode.
